(19) **Europäisches Patentamt**

**European Patent Office**

**Office européen des brevets**

(11) **EP 0 793 024 B1**

(12) **FASCICULE DE BREVET EUROPEEN**

(45) Date de publication et mention
de la délivrance du brevet:
**23.05.2001 Bulletin 2001/21**

(51) Int Cl.⁷: **F16B 7/14**

(21) Numéro de dépôt: **97400239.6**

(22) Date de dépôt: **03.02.1997**

(54) **Dispositif d'assemblage et de verrouillage de deux tubes téléscopiques**

Verbindungs- und Verriegelungsvorrichtung für teleskopische Rohre

Device for assembling and locking telescopic tubes

(84) Etats contractants désignés:
**AT BE CH DE DK ES FI GB GR IE IT LI NL PT SE**

(30) Priorité: **01.03.1996 FR 9602630**

(43) Date de publication de la demande:
**03.09.1997 Bulletin 1997/36**

(73) Titulaire: **Deville SA Sécateurs Pradines**
**49150 Bauge (FR)**

(72) Inventeur: **Deville, Antoine**
**Le Vieil Bauge, 49150 Bauge (FR)**

(74) Mandataire: **Keib, Gérard et al**
**NOVAMARK TECHNOLOGIES,**
**"Anciennement Brevets Rodhain & Porte",**
**IMMEUBLE VICTORIA MICHELET,**
**122, rue Edouard Vaillant**
**92593 Levallois Perret Cedex (FR)**

(56) Documents cités:
**EP-A- 0 314 357       FR-A- 2 432 424**
**US-A- 2 291 747**

## Description

L'invention concerne un dispositif d'assemblage et de verrouillage de deux tubes, selon le préambule de la revendication 1 comme connu par US-A-2 291 747.

Elle concerne plus particulièrement un dispositif d'assemblage et de verrouillage de tubes dans lequel le blocage est obtenu par un effet de rotation relatif des tubes l'un par rapport à l'autre, autour d'un axe de symétrie commun.

Elle concerne l'application d'un tel dispositif à la réalisation d'une perche télescopique.

Dans le cadre de l'invention, le terme "perche télescopique" doit être entendu dans son sens le plus large : perche proprement dite, mât coulissant, etc.

A titre d'exemple non exhaustif, le domaine d'application d'une telle perche télescopique concerne le jardinage. La perche télescopique peut être munie en l'une de ses extrémités d'un outil, par exemple du type sécateur ou similaire.

De nombreux dispositifs d'assemblage et de verrouillage de deux tubes du type précité (rotation) sont connus.

On connaît un premier dispositif comprenant un jeu de came excentrée et de vis. Lorsque on effectue une rotation relative des deux tubes, la came vient en contact avec l'un des tubes et frotte sur la paroi intérieure de ce tube. Cependant ce dispositif est, d'une part, très complexe, donc cher, et, d'autre part, son efficacité est réduite. En effet, la surface de frottement n'est pas importante, ce qui entraîne un coefficient de frottement faible. Enfin, la came étant de petite dimension, la résistance mécanique est réduite.

Le brevet US 2,291,747 décrit un trépied ayant des sections de pied télescopiques adaptables à le longueur désirée, ces sections étant reliées entre elles par un dispositif de jonction constitué par deux pièces en coin ayant des surfaces de jointement s'étendant selon un angle oblique, ces surfaces étant maintenues en contact entre elles notamment par deux ressorts et un boulon central. Cependant, même si le boulon central est renversé de telle manière que sa tête se situe dans le premier tube et le filet se trouve dans le disque d'en face, la presente invention diffère en ce que le filet est une partie intégrale de la seconde coque et non d'un disque distinct.

On connaît également un dispositif comprenant une pièce centrale filetée entourée de deux demi-cylindres. De façon plus précise, le filetage est conique et entraîne les deux pièces lorsque la pièce centrale est animée d'un mouvement de rotation autour de son axe de symétrie. Les deux demi-cylindres s'écartent alors angulairement à la manière de deux ailes et leurs extrémités frottent sur la paroi interne d'un des tubes.

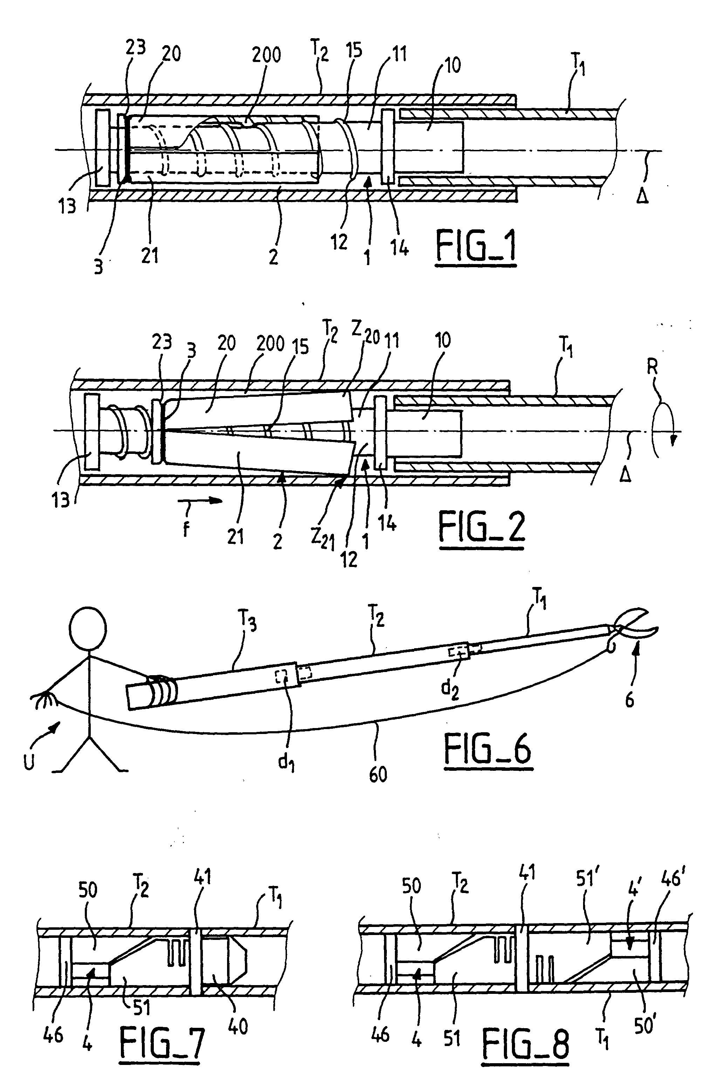

Les figures 1 et 2 annexées à la présente description illustrent schématiquement un tel dispositif.

Le dispositif d'assemblage et de verrouillage comprend une pièce centrale 1 en deux parties : une partie avant filetée il et un manchon cylindrique arrière 10. Ce dernier est destiné à s'emmancher dans un premier tube $T_1$ coulissant dans un second tube $T_2$, de diamètre interne légèrement supérieur au diamètre externe du premier tube $T_1$. Le premier tube $T_1$ vient en butée sur un anneau 14 séparant la partie avant filetée 11, du manchon arrière cylindrique 10. Les deux tubes, $T_1$ et $T_2$, et la pièce centrale 1 ont un axe de symétrie commun $\Delta$.

Le filetage 15 de la partie avant 11 s'inscrit, comme il a été indiqué, dans une surface conique. L'extrémité de la partie avant filetée 11 est munie d'une butée annulaire 13 et le diamètre du filetage 15 dans cette zone est plus faible que dans la zone proche de la butée annulaire 14.

La partie filetée avant 11 est entourée d'un ensemble 2 composé de deux demi-cylindres jointifs, 20 et 21 respectivement. Dans leur extrémité proche de la butée cylindrique 13, ils sont munis d'une gorge périphérique 23 de manière à pouvoir être retenus par un élastique 3 ou un organe similaire.

Sur la figure 1, on a représenté le dispositif d'assemblage et de verrouillage à l'état initial. Dans cet état, les deux demi-cylindres sont en butée sur l'anneau 13 et s'inscrivent dans un cylindre de diamètre inférieur au diamètre interne du tube $T_2$. De ce fait, l'ensemble peut glisser librement suivant une direction parallèle à l'axe de symétrie $\Delta$ précité.

Sur cette figure 1, les tubes, $T_1$ et $T_2$, sont représentés en coupe longitudinale. De même, on a représenté le demi-cylindre 20 en écorché partiel pour mieux illustrer la coopération de celui-ci avec le pas de vis 15. De façon plus précise, chaque demi-cylindre est muni d'un relief sur sa paroi interne destiné à s'engrener dans le filetage 15. Sur la figure 1, seul le relief, 200, afférent au demi-cylindre 20 est visible.

Comme l'illustre plus particulièrement la figure 2, lorsque l'on imprime un mouvement de rotation *R* au tube $T_1$, celui-ci entraîne à son tour la pièce centrale 1. On suppose que le manchon cylindrique 10 est enfoncé en force dans le tube $T_1$ ou que ce dernier est muni de moyens de fixation, par exemple des vis ou des organes similaires (non représentés). Les reliefs associés aux deux demi-cylindres, 20 et 21, (par exemple le relief 200) vont être entraînés par le mouvement de rotation imprimé au pas de vis 15. Il s'ensuit que l'ensemble des deux demi-cylindres, 20 et 21, va être animé d'un mouvement de translation vers la butée 14, c'est-à-dire parallèlement à l'axe de symétrie (flèche *f*). Les reliefs (par exemple 200) reposant sur la surface de la zone filetée 11 et cette dernière étant conique (le diamètre augmentant lorsque l'on se rapproche de la butée 14), les deux demi-cylindres, 20 et 21, vont s'écarter l'un de l'autre, du moins en leur extrémité proche de cette butée 14. En effet, ils sont retenus proches l'un de l'autre en leur autre extrémité par l'action de l'élastique 3.

Il s'ensuit que les deux demi-cylindres, 20 et 21, vont venir en butée sur la paroi interne du tube $T_2$ et exercer une pression sur celui-ci. Cette action permet d'obtenir l'assemblage et le verrouillage des deux tubes, $T_1$ et $T_2$, l'un par rapport à l'autre.

Ce dispositif ne nécessite que des pièces bon marché, en matériau plastique par exemple, ce qui autorise une fabrication par injection.

Cependant, il est aisé de constater, à l'examen de la figure 2 qui représente le dispositif à l'état verrouillé, que les zones où s'exercent les forces d'appui, donc le frottement, sont très limitées : zone d'extrémité $Z_{20}$ pour le demi-cylindre 20 et $Z_{21}$ pour le demi-cylindre 21. Il s'ensuit un verrouillage peu fiable. En outre, le dispositif travaillant en arc-boutement, il existe un risque réel de rupture des pièces si on soumet les deux demi-cylindres, 20 et 21, à une trop forte pression, c'est-à-dire si on accentue le mouvement de rotation relatif des deux tubes, $T_1$ et $T_2$, pour augmenter les surfaces de contact.

L'invention se fixe pour but un dispositif conservant les avantages des dispositifs qui viennent d'être rappelés mais ne présentant pas les inconvénients de ceux-ci, dont certains ont été rappelés.

Dans le dispositif selon l'invention, on prévoit un appui cylindrique sur la paroi interne du tube à assembler et verrouiller, ce qui, notamment, augmente fortement la surface de frottement et élimine les risques de rupture des pièces d'appui.

Pour ce faire, on prévoit une pièce centrale comportant une zone filetée inscrite dans un cylindre et deux demi-coques cylindriques entourant cette pièce centrale.

Selon un aspect important de l'invention, les deux demi-coques sont obtenues à partir de tubes cylindriques que l'on coupe suivant un plan incliné par rapport à l'axe de symétrie des cylindres. Ce plan de coupe forme alors un plan incliné permettant une translation relative des deux demi-coques suivant une direction parallèle à l'axe précitée. A l'état initial, ou état de repos, les deux demi-coques forment un cylindre. Lorsqu'elles glissent l'une sur l'autre, elles s'éloignent aussi de l'axe de symétrie tout en restant parallèles l'une à l'autre. C'est le filetage de la pièce centrale, lorsqu'il est animé d'un mouvement de rotation, qui va occasionner ce double mouvement de translation et d'éloignement. Si cet ensemble est inséré dans un tube, les deux demi-coques vont venir en contact avec la paroi interne de ce tube et exercer une pression sur toute la longueur des demi-coques, et non plus sur leurs seules extrémités.

Dans une variante préférée de l'invention, on prévoit en outre, sur l'une des demi-coques, deux pattes à propriété élastique permettant l'auto-blocage du dispositif dans l'un des tubes, pour éviter tout risque de patinage lorsque l'on imprime le mouvement de rotation précité.

L'invention a donc pour objet un dispositif d'assemblage et de verrouillage de deux tubes par mise en rotation relative de ceux-ci autour d'un axe commun, caractérisé en ce qu'il comprend un organe central à symétrie de révolution autour de cet axe, cet organe comportant une partie, dite avant, munie, sur au moins une fraction de sa longueur, d'un filetage cylindrique et une partie, dite arrière, destinée à être insérée dans un premier tube, en ce qu'il comprend deux coques hémicylindriques en forme de coin à rampes rectilignes entourant la partie dite avant et disposées tête-bêche, les rampes rectilignes formant un angle déterminé avec ledit axe commun, en ce que la partie dite avant est entourée des deux coques hémicylindriques et insérée dans un second tube, en ce que ces deux coques sont en appui l'une sur l'autre, par l'intermédiaire desdites rampes rectilignes, dans un premier état dit non-verrouillé permettant des mouvements de translation de la partie dite avant, parallèlement audit axe commun, à l'intérieur du second tube, et en ce qu'au moins une seconde coque est munie d'une nervure interne destinée à s'engrener dans ledit filetage cylindrique de manière à entraîner celle-ci en translation, parallèlement audit axe commun, lorsqu'un mouvement de rotation est imprimé à l'organe central autour de cet axe, à occasionner le chevauchement des coques l'une sur l'autre, par glissement sur lesdites rampes, et à les écarter progressivement de manière à atteindre un second état, dit de verrouillage, pour lequel les parois externes des coques viennent en contact avec la paroi interne dudit second tube et exercent un appui cylindrique sur celui-ci.

Elle a encore pour objet l'application d'un tel dispositif à la réalisation d'une perche télescopique.

On constate aisément que l'invention présente plusieurs avantages et parmi lesquels :

-   la surface de frottement est beaucoup plus importante que celle offerte par les dispositifs de l'art connu ;
-   les serrage et desserrage sont doux et progressifs du fait de la présence des plans inclinés ;
-   toutes les pièces sont particulièrement simples et peuvent être réalisées simplement par injection plastique ;
-   enfin, dans la variante de réalisation préférée, le système auto-bloquant évite tout risque de glissement.

L'invention sera mieux comprise et d'autres caractéristiques et avantages apparaîtront à la lecture de la description qui suit en référence aux figures annexées, et parmi lesquelles :

-   Les figures 1 et 2 illustrent un exemple de dispositif selon l'art connu ;
-   La figure 3 illustre un exemple de dispositif d'assemblage et de verrouillage de deux tubes selon un mode de réalisation préféré de l'invention ;
-   Les figures 4a et 4b illustrent, respectivement, les positions non-verrouillée et verrouillée de ce dispositif ;

- La figure 5 est une vue d'extrémité de la seconde demi-coque du dispositif de la figure 3 ;
- La figure 6 illustre l'application de ce dispositif à la réalisation d'une perche télescopique ;
- Les figures 7 et 8 illustrent des modes de réalisation supplémentaires du dispositif selon l'invention, appliqués à l'aboutement de tubes.

Dans ce qui suit, pour fixer les idées, on va tout d'abord se placer dans l'application préférée de l'invention, à savoir une perche télescopique. Un tel système comprend au moins deux tubes de diamètres différents coulissant l'un dans l'autre.

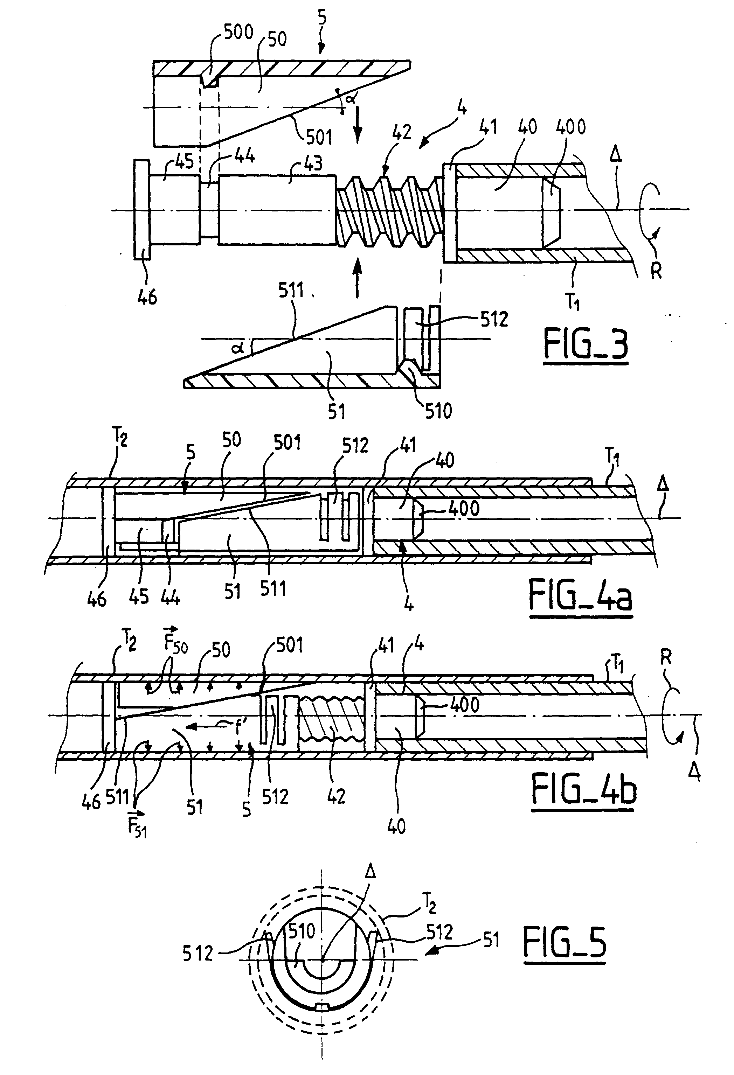

La figure 3 illustre, en éclaté, les éléments constitutifs du dispositif d'assemblage et de verrouillage selon l'invention. Il comprend, comme dans l'art connu, trois pièces principales : une pièce centrale 4 et d'un ensemble 5, composé de deux demi-coques 50 et 51, entourant cette pièce centrale 4.

La pièce centrale 4 comporte un canon arrière 40, avantageusement doté d'une extrémité tronconique 400, facilitant son insertion à force dans un premier tube $T_1$. Comme dans l'art connu, on peut également prévoir des moyens de fixation supplémentaires de ce canon arrière 40 dans le tube $T_1$, par exemple à base de vis (non représentées sur la figure 3). Le tube $T_1$ vient en butée sur une première collerette 41, avantageusement de même diamètre que le diamètre extérieur du tube $T_1$.

La partie avant de la pièce centrale 4 se divise en plusieurs zones : une zone filetée 42, contiguë à la collerette 41, une zone cylindrique 43, une rainure périphérique 44, de nouveau une zone cylindrique 45 et une seconde collerette périphérique 46, en extrémité, de même diamètre que la première collerette 41.

Selon une caractéristique importante de l'invention, la zone filetée s'inscrit dans un cylindre et non plus dans un cône.

Autour de la partie avant de la pièce centrale 4, on dispose deux coques ou plutôt demi-coques formant coin, respectivement 50 et 51. On doit bien comprendre que les notions "d'avant" ou "d'arrière" (employées ci-après) sont arbitraires et utilisées dans un but de faciliter la description. Ces deux demi-coques ont des parois extérieures hémi-cylindriques. Les dimensions relatives des demi-coques, 50 et 51, d'une part, et de la partie centrale, d'autre part, font que, à l'état initial ou état non-verrouillé, illustré plus particulièrement par la figure 4a, elles sont en appui l'une sur l'autre par l'intermédiaire de deux rampes rectilignes, 501 et 511 respectivement.

Dans l'état illustré sur cette figure 4a, l'ensemble peut être inséré librement dans un deuxième tube $T_2$, devant être verrouillé au tube $T_1$. Naturellement, comme pour le dispositif de l'art connu illustré par les figures 1 et 2, le tube $T_2$ a un diamètre interne légèrement supérieur au diamètre externe du tube $T_1$, de manière à ce que ce dernier puisse glisser et que la dimension hors tout de la perche (total des deux tubes emmanchés) soit ajustable. Le diamètre extérieur des demi-coques, 50 et 51, est choisi sensiblement égal au diamètre intérieur du tube $T_2$.

Si on se reporte de nouveau à la figure 3, on constate que la première demi-coque 50, représentée en coupe, est munie avantageusement sur la face intérieure de sa partie arrière d'une nervure 500. Celle-ci est destinée à coopérer avec la rainure 44, dans laquelle elle est engagée. Cette disposition permet de bloquer la demi-coque 50 en translation, c'est-à-dire suivant une direction parallèle à l'axe de symétrie du dispositif $\Delta$, axe commun aux tubes $T_1$ et $T_2$. Par contre, elle autorise un mouvement de rotation relatif de cette demi-coque 50 autour de la partie centrale 4. Dans la réalité, c'est la partie centrale qui va tourner autour de l'axe de symétrie $\Delta$, comme explicité ci-après.

Toujours à l'état initial, c'est-à-dire non verrouillé, les deux demi-coques 50, 51 sont en appui l'une sur l'autre par l'intermédiaire des rampes 501 et 511, comme il a été indiqué, mais aussi en butée sur les collerettes, la demi-coque 50 sur la collerette 46 et la demi-coque 51 sur la collerette 41. En d'autres termes, elles couvrent sensiblement tout l'espace compris entre les deux collerettes, 41 et 46.

La seconde demi-coque 51 est également munie sur sa face intérieure d'une nervure 510 en son extrémité arrière. Cette nervure 510 s'engrène dans le filet du pas de vis 42.

Lorsque le filetage 42 est mis en rotation $R$, comme illustré plus particulièrement par la figure 4b, il entraîne cette nervure en translation vers la collerette 46, c'est-à-dire l'extrémité de la partie avant de la pièce centrale. De ce fait, la demi-coque 51 va également être entraînée en translation suivant ce même sens (flèche $f'$). Les deux demi-coques, 50 et 51, étant accolées à l'état initial (voir figure 4a), elles vont glisser l'une sur l'autre par l'intermédiaire des rampes rectilignes, 501 et 511 respectivement. Ces rampes forment un angle $\alpha$ avec la direction de l'axe de symétrie $\Delta$, typiquement de l'ordre de 20 à 30°.

La demi-coque 50 est bloquée en translation par la nervure 500 engagée dans la rainure 46, elle va donc rester en butée sur la collerette 46. Seule la demi-coque 51 va donc pouvoir se déplacer en translation suivant une direction parallèle à l'axe $\Delta$ et se rapprocher de la collerette 46, c'est-à-dire de l'extrémité de la partie avant. Il s'ensuit également que, tout en restant parallèles entre elles, ces deux demi-coques vont s'éloigner de l'axe de symétrie et leurs parois externes se rapprocher, par effet de coin, de la paroi interne du tube $T_2$, jusqu'à ce qu'à ce qu'un contact soit établi.

La figure 4b illustre l'état atteint en fin de course. On constate aisément que la surface de contact entre le tube (paroi interne) et les deux demi-coques (parois externes) est très importante, puisqu'il s'agit d'une surface sensiblement cylindrique. Les forces de frottement qui en résultent sont donc également importantes : $\vec{F}_{50}$ et $\vec{F}_{51}$, respectivement. En outre, si

l'angle $\alpha$ n'est pas trop abrupt, le serrage et le desserrage s'effectueront de façon très douce et progressive. Cette dernière opération est obtenue simplement en imprimant un mouvement relatif de rotation des tubes $T_1$ et $T_2$, en sens inverse de celui nécessaire au serrage ($R$).

Il est à noter que l'on choisira, de préférence, un filetage dit "gauche".

Le dispositif qui vient d'être décrit remplit parfaitement les fonctions qui lui sont assignées. Cependant, lors de l'amorçage du serrage, il subsiste un risque de patinage.

Pour éviter ce dysfonctionnement, selon un mode de réalisation préféré de l'invention, on prévoit des moyens élastiques auto-bloquants. Ces moyens auto-bloquants peuvent consister avantageusement en au moins une languette élastique, et de préférence deux, disposées sur la demi-coque mobile 51, et plus précisément en son extrémité la plus proche de la collerette 41.

Ces languettes, 512, sont représentées sur les figures 3 à 4b, mais aussi sur la figure de détail 5. Cette dernière est une vue arrière de la demi-coque 51. Même à l'état initial (non-verrouillé), les languettes 512 s'écartent sensiblement tangentiellement de la paroi extérieure de la demi-coque 51 et viennent en contact avec la paroi interne du tube $T_2$ (en pointillés sur la figure 5). Par effet élastique, elles appuient sur cette paroi et cette force d'appui est suffisante pour éviter un patinage lors de la mise en rotation relative des deux tubes, $T_1$ et $T_2$. Lorsque les deux demi-coques, et en particulier la demi-coque 51 s'approche de la paroi interne du tube $T_2$, toujours par effet élastique, les languettes 512 se contractent et laissent la paroi externe de la demi-coque 51 s'approcher de la paroi interne du tube $T_2$ et y exercer la force de frottement précédemment décrite. On peut également prévoir des moyens élastiques auto-bloquants sur la première demi-coque 50.

Le dispositif qui vient d'être décrit permet l'immobilisation de toute paire de tubes coulissants et s'applique notamment à la réalisation de perches télescopiques. Il doit être clair que, notamment pour cette application, plusieurs tubes peuvent être aboutés, l'assemblage s'effectuant par paires. Pour chaque paire, il est nécessaire de prévoir un dispositif selon l'invention. A titre d'exemple non limitatif, la figure 6 illustre un exemple de perche télescopique comportant trois tubes : $T_1$ à $T_3$. On prévoit dans ce cas deux dispositifs d'assemblage et de verrouillage conformes à l'invention, $d_1$ et $d_2$. Naturellement les diamètres relatifs des diverses pièces doivent être déterminés de façon appropriée, de manière à ce que les tubes puissent glisser les uns dans les autres et les verrouillages puissent s'effectuer de façon satisfaisante.

On a également représenté sur cette figure un outil 6 (en l'occurrence un sécateur) disposé à l'extrémité de la perche et des moyens 60 permettant à l'utilisateur $U$ d'actionner l'outil 6.

Bien que, jusqu'à présent, il ait été supposé que les tubes à assembler, $T_1$ et $T_2$, coulissaient l'un dans l'autre, l'invention n'est pas limitée à ce mode de réalisation. On peut également assembler et verrouiller deux tubes identiques ou pour le moins de même diamètre interne.

La figure 7 illustre un premier exemple de réalisation. On n'a référencé sur cette figure que les éléments essentiels à la bonne compréhension de l'invention, références par ailleurs identiques à celles utilisées pour le dispositif des figures 3 à 5.

La structure générale du dispositif conforme au mode de réalisation selon la figure 7 est très similaire à celle qui vient d'être décrite. La seule différence notoire est que la collerette 41, intermédiaire entre la partie avant de l'élément central 4 et sa partie arrière, a un diamètre sensiblement égal au diamètre commun aux deux tubes, $T_1$ et $T_2$. Ceux-ci viennent donc en butée, de chaque côté, de cette collerette 41. La partie arrière 40 de l'élément central 4 est insérée en force dans le tube $T_1$ ou fixée à l'aide de tous moyens classiques (vis ou autres). La partie avant de l'élément central 4 est engagée, comme précédemment, dans le tube $T_2$. Le processus de verrouillage et de déverrouillage est identique à ce qui à été précédemment décrit.

La figure 8 illustre un second mode de réalisation permettant l'aboutement de deux tubes de même diamètre.

Le dispositif selon cette variante est entièrement symétrique par rapport à la collerette intermédiaire 41. Cette dernière conserve les caractéristiques dimensionnelles de la variante décrite en regard de la figure 7. De façon plus précise la partie arrière selon cette figure (40) est supprimée et remplacée par un deuxième ensemble fileté 4', comportant une collerette butoir 46'. Le deuxième ensemble fileté est entouré également de deux demi-coques, 50' et 51'. Ces composants jouent le même rôle que les composant portant le même numéro de référence. Il est inutile de redécrire le fonctionnement de cette partie duale.

Bien que la structure du dispositif selon cette variante soit plus complexe puisque le nombre de pièces en mouvement est doublé, elle présente cependant l'avantage d'être autobloquante sur les deux côtés et de doubler également la surface de frottement. Pour obtenir le verrouillage effectif, il suffit pour l'utilisateur de prendre un tube dans chaque main et d'exercer un couple de torsion sur l'ensemble.

A la lecture de ce qui précède, on constate aisément que l'invention atteint bien les buts qu'elle s'est fixés.

Le dispositif est à la fois simple et efficace. Il offre une grande surface de frottement, s'adaptant parfaitement à la forme de la paroi interne du ou des tube(s) à verrouiller sans risque de rupture des pièces d'appui. Le serrage et le desserrage sont doux et progressifs. En outre, dans la variante de réalisation préférée, mettant en oeuvre des moyens auto-bloquants réalisés simplement à l'aide de languettes élastiques, les problèmes de patinage sont évités et le serrage est obtenu dans tous les cas. Les pièces constitutives peuvent être obtenues en faisant appel à des procédés de fabrication peu onéreux, de façon avantageuse par injection sous pression de matière plastique.

Il doit être clair cependant que l'invention n'est pas limitée aux seuls exemples de réalisations précisément décrits, notamment en relation avec les figures 3 à 8.

Il doit être clair aussi que, bien que particulièrement adaptée à la réalisation de perches télescopiques ou organes similaires, notamment dans le domaine du jardinage, on ne saurait cantonner l'invention à ce seul type d'applications. Elle s'applique tout aussi bien, comme il a d'ailleurs été montré, à toutes les applications impliquant l'assemblage et le verrouillage de tubes, coulissant ou non.

Le filetage 42 pourrait être prévu près de la collerette 46 et la nervure 510 pourrait être prévue sur la première demi-coque 50 qui serait alors seule mobile.

La partie 43 pourrait également comporter un filetage de pas opposé au filetage 42, les deux demi-coques 50, 51 se déplaçant dans des sens opposés l'une vers l'autre lorsque l'on fait tourner l'organe central 4.

On pourrait également prévoir sur la face intérieure du tube T2 une nervure.


**Revendications**

1. Dispositif d'assemblage et de verrouillage de deux tubes ($T_1$, $T_2$) par mise en rotation relative de ceux-ci autour d'un axe commun ($\Delta$), comprenant un organe central (4) à symétrie de révolution autour de cet axe, cet organe (4) comportant une partie arrière (40) et une partie avant (42-45) munie, sur au moins une fraction de sa longueur, d'un filetage cylindrique (42), et deux coques hémicylindriques (50, 51) en forme de coin à rampes rectilignes (501, 511) entourant la partie avant (42-45) et disposées tête-bêche, les rampes rectilignes (501, 511) formant un angle déterminé ($\alpha$) avec ledit axe commun ($\Delta$), la partie avant étant entourée des deux coques hémicylindriques (50, 51) et étant insérée dans un second tube ($T_2$), ces deux coques (50, 51) étant en appui l'une sur l'autre, par l'intermédiaire des dites rampes rectilignes (501, 511), dans un premier état dit non-verrouillé permettant des mouvements de translation de la partie avant, parallèlement audit axe commun ($\Delta$), à l'intérieur du second tube, caractérisé en ce que le filetage cylindrique (42) est contigu à la partie arrière (40) insérée dans un premier tube ($T_1$) et en ce que la seconde coque (51) est munie d'une nervure interne (510) s'engrenant dans ledit filetage cylindrique (42) de manière à entraîner celle-ci en translation, parallèlement audit axe commun ($\Delta$), lorsqu'un mouvement de rotation est imprimé à l'organe central (4) autour de cet axe, à occasionner le chevauchement des coques (50, 51) l'une sur l'autre, par glissement sur lesdites rampes (501, 511), et à les écarter progressivement de manière à atteindre un second état, dit de verrouillage, pour lequel les parois externes des coques (50, 51) viennent en contact avec la paroi interne dudit second tube ($T_2$) et exercent un appui cylindrique sur celui-ci.

2. Dispositif selon la revendication 1, caractérisé en ce que la première coque (50) comprend une nervure (500) engagée dans une rainure périphérique (44) ménagée dans la partie avant de l'organe central (4), la nervure (500) coopérant avec cette rainure périphérique (44) de manière à interdire des mouvements de translation de la coque (50) parallèlement audit axe commun ($\Delta$).

3. Dispositif selon la revendication 1 ou 2, caractérisé en ce que l'extrémité libre (43-45) de la partie avant de l'organe central (4) est constituée d'un cylindre, et en ce que ce cylindre est muni d'une collerette d'extrémité cylindrique (46), formant butoir pour la seconde des dites coques (50) en forme de coin et dont le diamètre est sensiblement égal au diamètre interne dudit second tube ($T_2$).

4. Dispositif selon l'une des revendications 1 à 3, caractérisé en ce que lesdites parties avant et arrière de l'organe central (4) sont séparées par une collerette intermédiaire cylindrique (41), dont le diamètre est sensiblement égal au diamètre interne dudit second tube ($T_2$), et en ce ledit premier tube ($T_1$) vient en butée sur un premier côté de cette collerette (41) et ladite seconde coque (51) sur l'autre côté, dans ledit premier état.

5. Dispositif selon l'une des revendications 1 à 4, caractérisé en ce qu'en outre ladite seconde coque (51) est munie d'au moins une languette élastique (512) frottant sur la paroi interne dudit second tube ($T_2$) dans ledit premier état et exerçant une force de frottement lorsque ledit organe central (4) est mis en rotation, de manière à obtenir un auto-blocage dans le sens rotatif du dispositif dans le second tube ($T_2$).

6. Dispositif selon l'une quelconque des revendications précédentes, caractérisé en ce que ledit angle déterminé ($\alpha$) est compris dans la gamme 20 à 30 °.

7. Dispositif selon l'une quelconque des revendications précédentes, caractérisé en ce que ledit premier tube ($T_1$) à un diamètre externe plus faible que le diamètre interne dudit second tube ($T_2$) de manière à autoriser un coulissement du premier dans le second.

8. Dispositif selon l'une quelconque des revendications précédentes, caractérisé en ce que lesdits premier ($T_1$) et second ($T_2$) tubes ont même diamètre interne et en ce que lesdites parties avant et arrière de l'organe central (4) sont séparées par une collerette cylindrique intermédiaire (41) et en ce que les deux tubes ($T_1$, $T_2$) sont en butée, de part et d'autre, sur cette collerette (41).

9. Dispositif selon la revendication 8, caractérisé en ce que ladite partie arrière (4', 50', 51') est constituée de façon identique à ladite partie avant (4, 50, 51) de manière à ce que le dispositif soit symétrique par rapport à ladite collerette cylindrique intermédiaire (41).

10. Application d'un dispositif selon l'une quelconque des revendications 1 à 7 à la réalisation d'une perche télescopique ($T_1$-$T_3$).

**Patentansprüche**

1. Vorrichtung zum Verbinden und Verriegeln von zwei Rohren ($T_1$, $T_2$) durch deren relative Drehung um eine gemeinsame Achse ($\Delta$) mit einem um diese Achse drehsymmetrischen mittleren Organ (4), das einen hinteren Teil (40) und einen vorderen Teil (42-45), der wenigstens auf einem Teil seiner Länge mit einem zylindrischen Gewinde (42) und zwei den vorderen Teil (42-45) umgebenden und umgekehrt angeordneten halbzylindrische Schalen (50, 51) in Keilform mit geradlinigen Rampen (501, 511) ausgestattet ist, aufweist, wobei die geradlinigen Rampen (501, 511) einen vorbestimmten Winkel ($\alpha$) mit der genannten gemeinsamen Achse ($\Delta$) bilden, der vordere Teil von den beiden halbzylindrischen Schalen (50, 51) umgeben ist und sich in ein zweites Rohr ($T_2$) einfügt, diese beiden Schalen (50, 51) in einem ersten sogenannten unverriegelten Zustand, bei dem die Translationsbewegung des vorderen Teils parallel zur genannten gemeinsamen Achse ($\Delta$) in Innern des zweiten Rohrs ermöglicht ist, über die genannten geradlinigen Rampen (501, 511) aneinander stoßen, dadurch gekennzeichnet, dass das zylindrische Gewinde (42) dem in das erste Rohr ($T_1$) eingefügten hinteren Teil (40) angrenzt, und dass die zweite Schale (51) mit einer in das genannte zylindrische Gewinde (42) eingreifenden inneren Rippe versehen ist, so dass diese parallel zur genannten gemeinsamen Achse ($\Delta$) in eine Translationsbewegung versetzt wird, wenn dem mittleren Organ (4) eine Drehbewegung um diese Achse auferlegt wird, wodurch die Schalen (50, 51) durch Gleiten auf den genannten Rampen (501, 511) zueinander versetzt werden und sich zunehmend voneinander entfernen und dabei einen zweiten sogenannten Verriegelungszustand erreichen, bei dem die Außenwände der Schalen (50, 51) mit der inneren Wand des genannten zweiten Rohrs ($T_2$) in Berührung kommen und auf dieser einen zylindrischen Halt bewirken.

2. Vorrichtung nach Anspruch 1, dadurch gekennzeichnet, dass die erste Schale (50) eine in eine im vorderen Teil des mittleren Organs (4) angeordnete periphere Nut (44) eingreifende Rippe (500) aufweist, wobei die Rippe (500) mit dieser peripheren Nut (44) zusammenwirkt um Translationsbewegungen der Schale (50) parallel zur genannten gemeinsamen Achse ($\Delta$) zu verhindern.

3. Vorrichtung nach Anspruch 1 oder 2, dadurch gekennzeichnet, dass das freie Ende (43-45) des vorderen Teils des mittleren Organs (4) aus einem Zylinder besteht, dass dieser Zylinder mit einem zylindrischen Endkragen (46) versehen ist, der einen Anschlag für die zweite der genannten Schalen (50) in Keilform bildet und dass dessen Durchmesser im wesentlichen gleich zum Innendurchmesser des genannten zweiten Rohrs ($T_2$) ist.

4. Vorrichtung nach einem der Ansprüche 1 bis 3, dadurch gekennzeichnet, dass der genannte vordere und hintere Teil des mittleren Organs (4) durch einen zylindrischen Zwischenkragen (41) getrennt sind, dessen Durchmesser im wesentlichen gleich zum Innendurchmesser des genannten zweiten Rohrs ($T_2$) ist, und dass das genannte erste Rohr ($T_1$) in Anschlag auf eine erste Seite dieses Kragens (41) kommt und die genannte zweite Schale (51) auf der anderen Seite in den genannten ersten Zustand gelangt.

5. Vorrichtung nach einem der Ansprüche 1 bis 4, dadurch gekennzeichnet, dass die zweite Schale (51) ferner mit wenigstens einer elastischen Zunge (512) ausgestattet ist, die auf der Innenwand des genannten zweiten Rohrs ($T_2$) im genannten ersten Zustand reibt und eine Reibungskraft ausübt wenn das genannte mittlere Organ (4) in Drehung versetzt wird, so dass eine Selbstblockierung in der Drehrichtung der Vorrichtung in dem zweiten Rohr ($T_2$) eintritt.

6. Vorrichtung nach einem der vorhergehenden Ansprüche, dadurch gekennzeichnet, dass der genannte vorbestimmte Winkel ($\alpha$) im Bereich von 20 bis 30° liegt.

7. Vorrichtung nach einem der vorhergehenden Ansprüche, dadurch gekennzeichnet, dass das genannte erste Rohr ($T_1$) einen Außendurchmesser aufweist, der kleiner ist als der Innendurchmesser des genannten zweiten Rohrs ($T_2$), um eine Verschiebung des ersten im zweiten zu ermöglichen.

8. Vorrichtung nach einem der vorhergehenden Ansprüche, dadurch gekennzeichnet, dass das genannte erste ($T_1$) und zweite Rohr ($T_2$) gleichen Innendurchmesser haben und dass der genannte vordere und hintere Teil des mittleren Organs (4) durch einen zylindrischen Zwischenkragen (41) getrennt sind, und dass die beiden Rohre ($T_1$, $T_2$) auf diesem Kragen (41) beiderseits in Anschlag sind.

9. Vorrichtung nach Anspruch 8, dadurch gekennzeichnet, dass der genannte hintere Teil (4', 50', 51') identisch zum vorderen Teil (4, 50, 51) aufgebaut ist, so dass die Vorrichtung bezüglich des genannten zylindrischen Zwischenkragens (41) symmetrisch ist.

10. Verwendung einer Vorrichtung nach einem der Ansprüche 1 bis 7 zur Herstellung einer Teleskopstange (T1-T3).

**Claims**

1. Device for assembling and locking two tubes ($T_1$, $T_2$) by turning them in relative rotation about a common axis ($\Delta$), comprising a central member (4) with symmetry of revolution about this axis, this member (4) comprising a rear part (40) and a front part (42-45) which is equipped, over at least a fraction of its length, with a cylindrical screw thread (42), and two semi-cylindrical shells (50, 51) in the form of wedges with straight ramps (501, 511) surrounding the front part (42-45) and arranged top-to-toe, the straight ramps (501, 511) forming a given angle ($\alpha$) with the said common axis ($\Delta$), the front part being surrounded by the two semi-cylindrical shells (50, 51) and inserted in a second tube ($T_2$), these two shells (50, 51) resting one upon the other via the said straight ramps (501, 511) in a first, so-called unlocked, state allowing translational movements of the front part, parallel to the said common axis ($\Delta$), inside the second tube, characterized in that the cylindrical screw thread (42) is contiguous with the rear part (40) inserted in a first tube ($T_1$) and in that the second shell (51) is equipped with an internal rib (510) engaging with the said cylindrical screw thread (42) so as to drive the latter in a translational movement parallel to the said common axis ($\Delta$) when a turning movement is imparted to the central member (4) about that axis, so as to cause the shells (50, 51) to overlap one another by sliding along the said ramps (501, 511), and so as to make them gradually move apart so as to reach a second, so-called locked, state in which the external walls of the shells (50, 51) come into contact with the internal wall of the said second tube ($T_2$) and bear cylindrically against it.

2. Device according to Claim 1, characterized in that the first shell (50) comprises a rib (500) engaged in a peripheral groove (44) formed in the front part of the central member (4), the rib (500) collaborating with this peripheral groove (44) in such a way as to prevent translational movements of the shell (50) parallel to the said common axis ($\Delta$).

3. Device according to Claim 1 or 2, characterized in that the free end (43-45) of the front part of the central member (4) consists of a cylinder and in that this cylinder is equipped with a cylindrical end flange (46) forming a buffer for the second of the said wedge-shaped shells (50) and the diameter of which is more or less equal to the inside diameter of the said second tube ($T_2$).

4. Device according to one of Claims 1 to 3, characterized in that the said front and rear parts of the central member (4) are separated by a cylindrical intermediate flange (41), the diameter of which is more or less equal to the inside diameter of the said second tube ($T_2$), and in that the said first tube ($T_1$) butts up against a first side of this flange (41) and the said second shell (51) butts up against the other side, in the said first state.

5. Device according to one of Claims 1 to 4, characterized in that, in addition, the said second shell (51) is equipped with at least one elastic tab (512) rubbing on the internal wall of the said second tube ($T_2$) in the said first state and exerting a frictional force when the said central member (4) is turned, so as to cause self-locking of the device in the rotation direction in the second tube ($T_2$).

6. Device according to any one of the preceding claims, characterized in that the said given angle ($\alpha$) is in the range of 20 to 30°.

7. Device according to any one of the preceding. claims, characterized in that the said first tube ($T_1$) has an outside diameter smaller than the inside diameter of the said second tube ($T_2$) so as to allow the first to slide in the second.

8. Device according to any one of the preceding claims, characterized in that the said first ($T_1$) and second ($T_2$) tubes have the same inside diameter and in that the said front and rear parts of the central member (4) are separated by an intermediate cylindrical flange (41) and in that the two tubes ($T_1$, $T_2$) butt one against each side of this flange (41).

9. Device according to Claim 8, characterized in that the said rear part (4', 50', 51') is constructed in an identical way to the said front part (4, 50, 51) so that the device is symmetric with respect to the said intermediate cylindrical flange (41).

10. Application of a device according to any one of Claims 1 to 7 to the production of a telescopic pole $(T_1-T_3)$ .

**FIG_1**

**FIG_2**

**FIG_6**

**FIG_7**

**FIG_8**

FIG_3

FIG_4a

FIG_4b

FIG_5